# EUROPEAN PATENT APPLICATION

(11) **EP 2 541 436 A1**
(43) Date of publication of application: **02.01.2013**
(21) Application number: 11290311.7
(22) Date of filing: 01.07.2011
(51) Int. Cl.: G06F 17/28, H04L 12/26

(54) **System and method for providing translations in a telecommunication-signal test device**

(71) Applicant: Alcatel Lucent, 75007 Paris (FR)
(72) Inventor: Klein, Johann, 74321 Bietigheim-Bissingen (DE)
(74) Representative: Michalski Hüttermann & Partner

(57) **Abstract**

The invention proposes a system (10) for providing translations in a telecommunication-signal test device with a receiving and/or monitoring unit (12) for receiving and/or monitoring telecommunication-signals from a telecommunication network. The system (10) comprises (i) a determination unit (14) for determining a source language of the received and/or monitored telecommunication-signals and/or for determining a target language, and (ii) a translation unit (16) for translating the signaling information of said received and/or monitored telecommunication-signals from said source language into said target language. The invention further relates to a corresponding method for providing translations in a telecommunication-signal test device.

## Description

### TECHNICAL FIELD

The present invention relates to telecommunication techniques.

### BACKGROUND

There are a number of telecommunication-signal test devices, which include a capability to capture service related signaling of a network under test. Some of these devices include a protocol decode functionality that translates the signaling information (which is captured as raw binary packets at the interfaces) into corresponding symbolic form for human interpretation. As some portions of this signaling information may be linked to a corresponding language, if the user of a telecommunication test device is not able to understand this language, the user will not be able to interpret the signaling information of these signals properly.

### SUMMARY

Various embodiments provide a method and apparatus for providing translations in a telecommunication-signal test device with a receiving and/or monitoring unit for receiving and/or monitoring telecommunication-signals from a telecommunication network. The system comprises: (i) a determination unit for determining a source language of the received and/or monitored telecommunication-signals and/or for determining a target language, and (ii) a translation unit for translating the signaling information of said received and/or monitored telecommunication-signals from said source language into said target language. Preferably, the system is a system for providing real-time translations in a telecommunication-signal test device. In this embodiment, the telecommunication-signal test device and a module for this test device compose the system, wherein the module is adapted for providing real-time translations.

The telecommunication-signals may be tapped from a connection box or a signaling line of the telecommunication network. In other embodiments, these signals can be received via wireless signaling from the telecommunication network.

The determination of the source language can be performed by analyzing portions of the telecommunication signals.

In some embodiments, the determination unit is a selection unit. A corresponding determination of the source language and/or the target language is a selection. The selection of the source language and/or a target language can be a selection from a menu or a selection by entering the desired language by means of an input device like a keyboard.

In some embodiments, said telecommunication-signals comprise voice and/or data signals. The voice and/or data signals are language related signals, wherein the term language means a natural language (or ordinary language), a constructed language like Esperanto or a formal language such as a computer-programming language.

In a further embodiment, the telecommunication-signals are digital signals.

In some embodiments, the telecommunication-signal test device is a protocol test device or protocol tracer device. A protocol tracer device can collect and decode the intercepted data packets via different codecs.

In one embodiment, the telecommunication-signal test device is a General Packet Radio Service test device. An example of such product is a tester device for GPRS Core Network like the A8619 tester device. This Protocol Test Device has been developed to enable service providers to perform functional and capacity testing of GPRS systems (GPRS: General packet radio service). It provides high-speed Ethernet capabilities. The software tests control signaling procedures as well as packet switched bearer data.

In some embodiments, a method for providing translations from a source language to a target language in a telecommunication-signal test device is presented. Within said method, telecommunication-signals are received and/or monitored from a telecommunication network, a source language of the received and/or monitored telecommunication-signals and/or a target language are determined and the signaling information of said received and/or monitored telecommunication-signals are translated from said source language into said target language. Preferably, the method is a method for providing real-time translations in a telecommunication-signal test device.

In some embodiments, the determination of the source language and/or the target language is a selection of the source language and/or the target language. The selection of the source language and/or a target language can be a selection from a menu or a selection by entering the desired language by means of an input device like a keyboard.

In further embodiments, the telecommunication-signals are voice and/or data signals. The voice and/or data signals are language related signals, wherein the term language means a natural language (or ordinary language) or a constructed language like Esperanto or a formal language such as a computer-programming language.

In another embodiment, the telecommunication-signals are digital signals.

According to yet another embodiment, the telecommunication-signal test device is a protocol test device or protocol tracer device. According to yet another embodiment, the telecommunication-signal test device is a General Packet Radio Service (GPRS) test device.

### BRIEF DESCRIPTION OF THE DRAWINGS

Various embodiments are illustrated in the accompanying drawings, in which:
Fig. 1 shows schematically exemplary units, and
Fig. 2 shows schematically a flowchart.

In the following, the invention will be described with respect to the figures.

### DETAILED DESCRIPTION OF ILLUSTRATIVE EMBODIMENTS

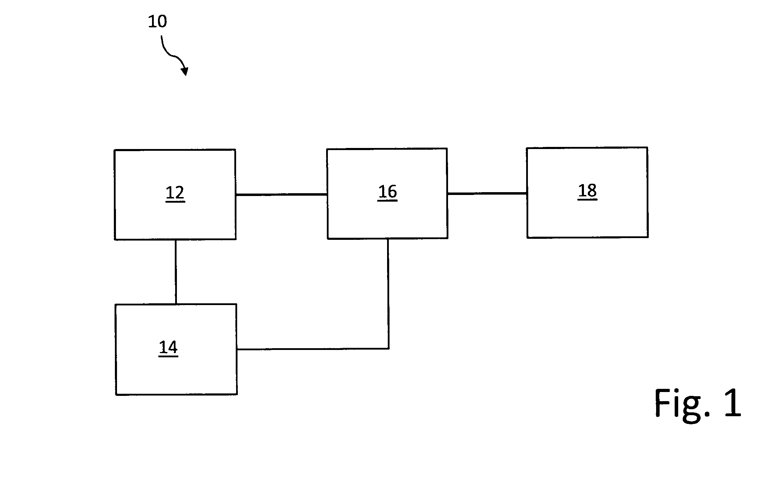

In Fig. 1 a system 10 according to an embodiment of the invention is shown. A receiving unit and/or a monitoring unit 12 for receiving telecommunication signals is equipped with some antenna (not shown) and/or test prods. The receiving and/or monitoring unit 12 may be any kind of digital or analog unit for receiving corresponding signals. The receiving and/or monitoring unit 12 may include a tapping device for tapping a signaling line or a connection box of the telecommunication network to receive and/or monitor the telecommunication signals. Said monitoring unit 12 is part of a telecommunication test device.

The system 10 also comprises a determining unit 14 for determining a source language of the received and/or monitored telecommunication-signals and/or for selecting a target language. The system 10 further includes a translation unit 16 for translating said received or monitored telecommunication signals from said determined source language into said determined target language. The translation is a real-time translation. The translation unit 16 is coupled to an amplifier or directly to an output unit 18 like a display or a speaker. The output unit 18 may be part of the telecommunication test device or a separate output unit 18.

The determination of the source language and/or the target language can be a selection from a menu or a selection by entering the desired language by means of an input device like a keyboard. This input device may be part of the telecommunication test device as well. The determining unit 14 may offer the possibility to select a source language manually, i.e. by means of a user interaction.

As an alternative to the selection by a user, the determination of the source language can be performed by analyzing a signal sequence of the telecommunication signals.

The determination unit 14 may also be adapted to store a previous selection of a source language by means of a memory.

Preferably, the telecommunication-signal test device and a module for this test device compose the system 10. In this embodiment, the module comprises the translation unit 16 for providing the real-time translations.

The translation unit 16 may be based on any kind of appropriate hardware, software or combination thereof allowing for translation of source language into a target language. The processing may be done on the fly or may produce a somewhat delayed translation depending on the processing constraints.

Furthermore, the determination unit 14 offers the possibility to select a target language manually, i.e. a language the user is interested in.

Alternatively or in addition, the determination unit 14 may detect the location of the signal source. Such a determination by means of a localization of the signal source may be based on positioning data such as those received from an address code (like a country code) related to a location, region or country. After the localization, the determination unit 14 reads the source language corresponding to the location, region or country from a reference table.

It may be appreciated that the units described above may be part of subsystems or may be completely integrated into the telecommunication-signal test device. In some embodiments, the telecommunication-signal test device can be a protocol test device or protocol tracer device. A protocol tracer device can collect and decode the intercepted data packets via different codecs.

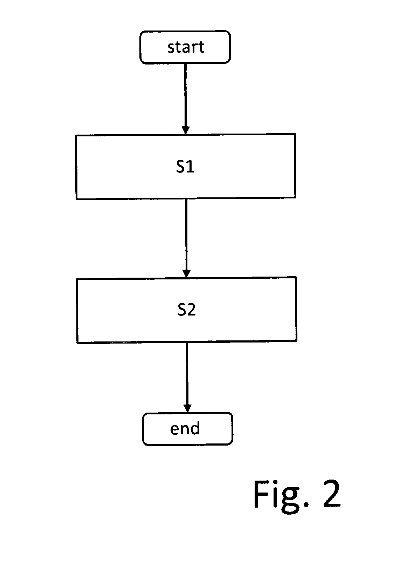

Turning now to Figure 2, where an exemplary operation of embodiments according to the invention is described. Although steps are described in a sequential manner, it may be appreciated that variations may be done manually by an interaction with a user or it may be done automatically or it may be based on both approaches.

The receiving and/or a monitoring unit 12 of the telecommunication-signal test device receives telecommunication signals from a telecommunication network.

In a step S1, a source language of the received and/or monitored telecommunication signals and/or a target language is determined by the determination unit 14.

In a first embodiment, the determination of a source language in step S1 may be done manually, i.e. the language is selected by means of a User interaction. In a second embodiment, the determination of a source language may be automated based on an analysis of a signal sequence of the received telecommunication signals. In other embodiments, the determination may comprise detecting the location of the signal source.

In a majority of cases, the determination of the target language in step S1 is done manually, i.e. the language is selected by means of a User interaction. Alternatively, the telecommunication-signal test device may predefine the target language.

In some embodiments, the selection may encompass setting a previous selection of a source language and/or target language as a default. Once source and target language are selected, a received signaling information is translated from said selected source language into said selected target language (step S2). The result of the translation is provided to an amplifier and/or a data storage device and/or directly to an output unit like a speaker or a display.

The translation (in step 2) of the signaling information may be based on conventional techniques employing any combination of appropriate hardware, software or combination thereof allowing for translation of source language into a target language. The processing may be done on the fly or may produce a somewhat delayed translation depending on the processing constraints.

Since the user of the telecommunication test device is able to understand the target language, the user will be able to interpret the signaling information of the received and/or monitored telecommunication-signals properly.

The telecommunication-signal test device can be a General Packet Radio Service test device. An example of such product is a tester device for GPRS Core Network. This Protocol Test Device enables service providers to perform functional and capacity testing of GPRS systems (GPRS: General packet radio service).

While the invention has been illustrated and described in detail in the drawings and foregoing description, such illustration and description are to be considered illustrative or exemplary and not restrictive; the invention is not limited to the disclosed embodiments.

Other variations to be disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

## Claims

1. System (10) for providing translations in a telecommunication-signal test device with a receiving and/or monitoring unit (12) for receiving and/or monitoring telecommunication-signals from a telecommunication network, the system (10) comprising:
• a determination unit (14) for determining a source language of the received and/or monitored telecommunication-signals and/or for determining a target language, and
• a translation unit (16) for translating the signaling information of said received and/or monitored telecommunication-signals from said source language into said target language.

2. System according to claim 1, wherein the determination unit (14) is a selection unit.

3. System according to claim 1 or 2, wherein the telecommunication-signals comprise voice and/or data signals.

4. System according to one of claims 1 to 3, wherein the telecommunication-signals are digital signals.

5. System according to one of claims 1 to 4, wherein the telecommunication-signal test device is a protocol test device or protocol tracer device.

6. System according to claim one of claims 1 to 5, wherein the telecommunication-signal test device is a General Packet Radio Service test device.

7. Method for providing translations in a telecommunication-signal test device, comprising the steps of
● receiving and/or monitoring telecommunication-signals from a telecommunication network,
● determining a source language of the received and/or monitored telecommunication-signals and/or a target language (S1), and
● translating the signaling information of said received and/or monitored telecommunication-signals from said source language into said target language (S2).

8. Method according to claim 7, wherein the determination of the source language and/or the target language is a selection of the source language and/or the target language.

9. Method according to claim 7 or 8, wherein the telecommunication-signals are voice and/or data signals.

10. Method according to one of claims 7 to 9, wherein the telecommunication-signals are digital signals.

11. Method according to one of claims 7 to 10, wherein the telecommunication-signal test device is a protocol test device or protocol tracer device.

## Amended claims

### Amended claims in accordance with Rule 137(2) EPC.

**1.** System (10) for providing translations in a telecommunication-signal test device, the system (10) comprising:
● a receiving and/or monitoring unit (12) for receiving and/or monitoring telecommunication-signals from a telecommunication network,
● a determination unit (14) for determining a source language of the received and/or monitored telecommunication-signals and/or for determining a target language, and
● a translation unit (16) for translating the signaling information of said received and/or monitored telecommunication-signals from said source language into said target language,
wherein said receiving and/or monitoring unit (12) is part of said telecommunication-signal test device and includes a tapping device for tapping a signaling line or a connection box of the telecommunication network to receive and/or monitor the telecommunication signals.

**2.** System according to claim 1, wherein the determination unit (14) is a selection unit.

**3.** System according to claim 1 or 2, wherein the telecommunication-signals comprise voice and/or data signals.

**4.** System according to one of claims I to 3, wherein the telecommunication-signals are digital signals.

**5.** System according to one of claims 1 to 4, wherein the telecommunication-signal test device is a protocol test device or protocol tracer device.

**6.** System according to claim one of claims 1 to 5, wherein the telecommunication-signal test device is a General Packet Radio Service test device.

**7.** Method for providing translations in a telecommunication-signal test device, comprising the steps of
● receiving and/or monitoring telecommunication-signals from a telecommunication network by use of a receiving and/or monitoring unit (12) of said telecommunication-signal test device, the receiving and/or monitoring unit (12) including a tapping device for tapping a signaling line or a connection box of the telecommunication network to receive and/or monitor the telecommunication signals,
● determining a source language of the received and/or monitored telecommunication-signals and/or a target language (S1), and
● translating the signaling information of said received and/or monitored telecommunication-signals from said source language into said target language (S2).

**8.** Method according to claim 7, wherein the determination of the source language and/or the target language is a selection of the source language and/or the target language.

**9.** Method according to claim 7 or 8, wherein the telecommunication-signals are voice and/or data signals.

**10.** Method according to one of claims 7 to 9, wherein the telecommunication-signals are digital signals.

**11.** Method according to one of claims 7 to 10, wherein the telecommunication-signal test device is a protocol test device or protocol tracer device.
